# EUROPEAN PATENT APPLICATION

(11) **EP 2 897 445 A2**
(43) Date of publication of application: **22.07.2015**
(21) Application number: 14196022.9
(22) Date of filing: 03.12.2014
(51) Int. Cl.: H05B 37/02, H04N 21/00, H03M 7/30

(54) **System and method for generating scene sound and light and scene playing unit**

(30) Priority: 20.01.2014 CN 201410024919
(71) Applicant: Optoma Coporation, New Taipei City 23143 (TW)
(72) Inventor: Cheng, Po-Wen, 23143 New Taipei City (TW); Hsieh, Tsung-Hsien, 23143 New Taipei City (TW); Lu, Yi-Chun, 23143 New Taipei City (TW); Chu, Ya-Cherng, 23143 New Taipei City (TW)
(74) Representative: Ter Meer Steinmeister & Partner

(57) **Abstract**

A scene sound and light generating system, a method for generating scene sound and light, and a scene playing unit are provided. The method for generating scene sound and light is adapted to the scene sound and light generating system, and includes following steps. Scene setting data is received. A scene playing unit of the scene sound and light generating system is controlled to play at least one of a scene light and a scene sound according to the scene setting data. The scene setting data is used for indicating a characteristic of at least one of the scene light and the scene sound played by the scene playing unit, and the scene setting data is adapted to be created, edited, recorded, set, exchanged, and/or shared to achieve a customized scene sound and light effect.

## Description

### CROSS-REFERENCE TO RELATED APPLICATION

This application claims the priority benefit of China application serial no. 201410024919.4, filed on January 20, 2014. The entirety of the above-mentioned patent application is hereby incorporated by reference herein and made a part of this specification.

### BACKGROUND

### Technical Field

The invention relates to a system and a method for generating sound and light. Particularly, the invention relates to a system and a method for generating scene sound and light.

### Related Art

Presently, in order to increase a market distinction, home theatres in the market are generally added with additional light to enhance a scene effect. However, the products in the market produce only several specific scene effects, so that atmosphere is limited. Furthermore, a user fails to edit, record, set or share the personal scene effect with others.

Patents related to scene sound and light are U.S. Publication No. 20040208315 and U.S. Patent No. 7012623, though setting and generation of the scene effect still have many restrictions.

### SUMMARY

Accordingly, the invention is directed to a system and a method for generating scene sound and light, and creation, edition, recording, setting, exchanging, and/or sharing of scene sound and light data are implemented, so as to generate customized scene sound and light effect.

Other objects and advantages of the invention may be further illustrated by the technical features broadly embodied and described as follows.

In order to achieve one or a portion of or all of the objects or other objects, an embodiment of the invention provides a scene sound and light generating system including a scene playing unit and a sound and light control unit. The sound and light control unit is connected to the scene playing unit through a wired or wireless manner, receives scene setting data, and controls the scene playing unit to play at least one of a scene light and a scene sound according to the scene setting data. The scene setting data is used for indicating a characteristic of at least one of the scene light and the scene sound played by the scene playing unit.

In an embodiment of the invention, the scene setting data is an audio video interleave (AVI) format file, and the sound and light control unit controls the characteristic of at least one of the scene light and the scene sound according to attribute parameters in the AVI format file.

In an embodiment of the invention, the sound and light control unit is a control chip.

In an embodiment of the invention, the scene sound and light generating system further includes a processing unit, where the processing unit controls the sound and light control unit to drive at least one of a scene light source and a scene sound source according to the scene setting data.

In an embodiment of the invention, the scene sound and light generating system further includes a storage unit, where the processing unit converts sound and light recording data into the scene setting data, and stores the scene setting data to the storage unit.

In an embodiment of the invention, the processing unit reads the scene setting data from the storage unit.

In an embodiment of the invention, the processing unit edits the attribute parameters of the scene setting data according to an edit instruction.

In an embodiment of the invention, the processing unit is a central processing unit.

The invention provides a method for generating scene sound and light adapted to a scene sound and light generating system. The method for generating scene sound and light includes following steps. Scene setting data is received. A scene playing unit of the scene sound and light generating system is controlled to play at least one of a scene light and a scene sound according to the scene setting data. The scene setting data is used for indicating a characteristic of at least one of the scene light and the scene sound played by the scene playing unit.

In an embodiment of the invention, the scene playing unit includes at least one of a scene light source and a scene sound source, the scene light source generates the scene light, and the scene sound source generates the scene sound.

In an embodiment of the invention, the scene setting data is an AVI format file, and the step of controlling the scene playing unit to play at least one of the scene light and the scene sound according to the scene setting data includes a following step. A characteristic of at least one of the scene light and the scene sound is controlled according to attribute parameters in the AVI format file.

In an embodiment of the invention, the scene setting data is written in a script language.

In an embodiment of the invention, the method for generating scene sound and light further includes following steps. Sound and light recording data is converted into the scene setting data. The scene setting data is stored to a storage unit.

In an embodiment of the invention, the step of receiving the scene setting data includes a following step. The scene setting data is read from the storage unit.

In an embodiment of the invention, the method for generating scene sound and light further includes a following step. Attribute parameters of the scene setting data are edited according to an edit instruction.

The invention provides a scene playing unit, and the scene playing unit is configured to play at least one of a scene light and a scene sound according to scene setting data. The scene setting data is used for indicating a characteristic of at least one of the scene light and the scene sound played by the scene playing unit, and the scene playing unit is controlled by the scene setting data to play.

According to the aforementioned descriptions, in the embodiment, the scene setting data is received, and the scene playing unit is controlled to play at least one of the scene light and the scene sound according to the scene setting data, so as to implement creating, editing, recording, setting, exchanging, and/or sharing the scene sound and light data, and accordingly implement generating customized scene sound and light effect. In the embodiment of the invention, the scene setting data is, for example, an AVI format file.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a scene sound and light generating system according to an embodiment of the invention.
FIG. 2 is a schematic diagram of controlling a scene light according to an audio video interleave (AVI) format file according to an embodiment of the invention.
FIG. 3 is a schematic diagram of a scene sound and light generating system according to another embodiment of the invention.
FIG. 4 is a flowchart illustrating a method for generating scene sound and light according to an embodiment of the invention.
FIGS. 5A-5C are flowcharts illustrating methods for generating scene sound and light according to three embodiments of the invention.

### DETAILED DESCRIPTION OF DISCLOSED EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

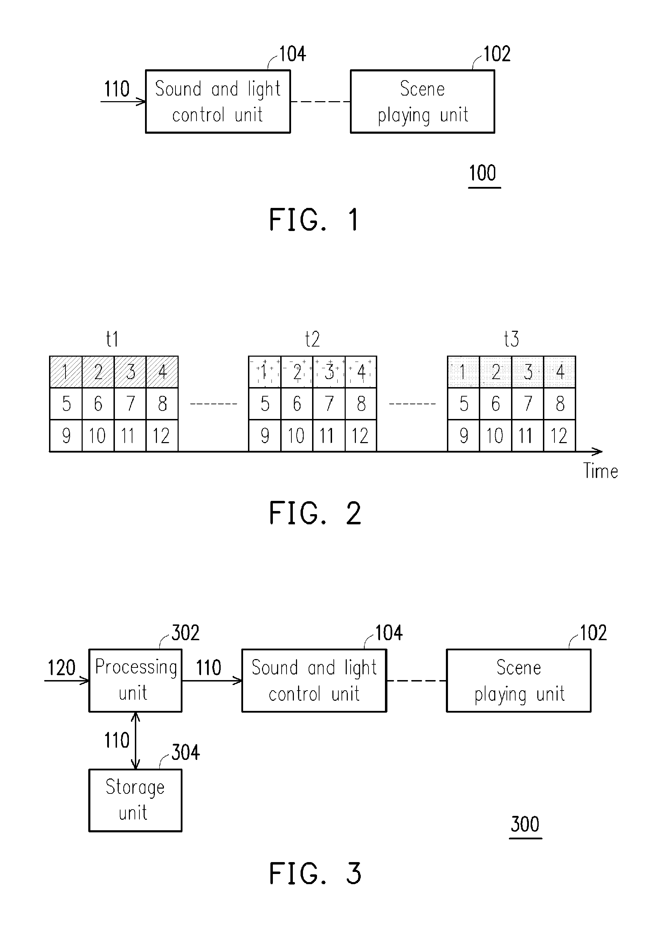

In the embodiment, a scene playing unit may be controlled by received scene setting data to play, such that the scene playing unit may play at least one of a scene light and a scene sound according to the scene setting data used for indicating a scene characteristic. In detail, referring to FIG. 1, a scene sound and light generating system 100 is, for example, an illumination system, an audio system, a speaker, an imaging system, a computer system, a mobile phone, a multimedia player, etc., which is used for outputting sounds and/or color beams, though the invention is not limited thereto. The scene sound and light generating system 100 includes a scene playing unit 102 and a sound and light control unit 104. The scene playing unit 102 may be connected to the sound and light control unit 104 through a wired or wireless manner. The scene playing unit 102 is used for playing at least one of a scene light and a scene sound. The sound and light control unit 104 receives scene setting data 110, and controls the scene playing unit 102 to play at least one of the scene light and the scene sound according to the scene setting data 110. The scene setting data 110 is used for indicating a characteristic of at least one of the scene light and the scene sound played by the scene playing unit 102, and the scene setting data 110 may be, for example, provided by a thumb drive, a removable/portable hard disk, a memory card, a digital camera, a video camera, an MP3 player, a mobile phone, etc. that has a storage device such as a removable/portable storage device, a hard disk, etc., or provided through a network storage space, a network streaming (for example, audio streaming and/or video streaming service, for instance, a network service such as Pandora, Youtube, etc.), or provided through data transmission such as email, instant messaging, a community/social website, an Internet calendar service (ICS), etc. In this way, the sound and light control unit 104 may control the scene playing unit 102 to play the scene light and the scene sound according to the scene setting data 110, and the created, edited, recorded or/and stored scene sound and light effects may further be shared or/and exchanged by different users in the embodiment.

Further, the scene playing unit 102 mentioned above, for example, includes at least one of a scene light source (not shown) and a scene sound source (not shown). The scene light source may generate the scene light, and the scene sound source may generate the scene sound. The scene light source is, for example, a device capable of emitting light, changing color or imaging, such as a lamp, an imaging device (for example, a projector, a self-luminous display, a non-self-luminous display, a transmissive display panel, a reflective display panel, a semi-transflective display panel, a digital camera, a video camera, etc.), a computer (for example, a desktop computer, a notebook computer, a tablet PC, etc.), a mobile phone, an image player, a multimedia player, etc. The scene sound source is, for example, a device capable of generating sounds such as an audio device, a speaker, a multimedia player, an MP3 player, an electronic musical instrument, a projector, a computer, a mobile phone, etc. Moreover, the sound and light control unit 104 is, for example, implemented by a control chip, and the scene setting data 110 may be an audio video interleave (AVI) format file, a moving picture experts group (MPEG) format file, a 3GP format file, an MPG format file, a windows media video (WMV) format file, a flash video (FLV) format file, a shockwave flash (SWF) format file, a real video format file, a windows media audio (WMA) format file, a waveform audio (WAV) format file, an adaptive multi-rate compression (AMR) format file, an advanced audio coding (AAC) format file, an OGG format file, a multimedia container format (MCF) file, a QuickTime format file, a joint photographic experts group (JPEG) format file, a bitmap (BMP) format file, a portable network graphics (PNG) format file, a tagged image file formation (TIFF) format file, an icon (ICO) format file, a graphics interchange (GIF) format file, a Truevision tagged graphics (TARGA) format file, etc., though the invention is not limited thereto.

Take an AVI format file with high compatibility used to control the scene light source for example, the AVI format file may have a plurality of attribute parameters such as a light attribute parameter and/or a sound attribute parameter. Regarding the light attribute parameter, pixel array data may be used to record parameters such as pixel location, resolution, pixel color, frame, frame rate, etc.; wherein the parameter of pixel color may further include sub-parameters such as pixel color deep, pixel gray level, etc., and the sound and light control unit 104 may control the characteristic of the scene light according to the attribute parameters in the AVI format file. In detail, the aforementioned light attribute parameters such as pixel location, resolution, pixel color, pixel color deep, frame, frame rate, etc. may respectively correspond to scene light characteristic parameters such as an index of the scene light source, a number of supportable scene light sources, a color of the scene light, a color deep of the scene light, a sampling time of the scene light, a sampling rate of the scene light, etc. In this way, by adjusting the attribute parameters in the AVI format file, the sound and light control unit 104 may control an effect of the scene light played by the scene light source of the scene playing unit 102 according to the AVI format file.

According to the above descriptions, referring to FIG. 1 and FIG. 2. The AVI format file of the embodiment controls a plurality of scene light sources, and the AVI format file, for example, has pixel array data of 4×3, wherein the pixel array data includes pixels 1-12, i.e. total 12 pixels. Through the above pixel array data, 12 supportable scene light sources may be used to control 12 scene light sources or less. For simplicity's sake, control of four scene light sources is taken as an example for descriptions. In the embodiment, it is assumed that four scene light sources (for example, four lamps) in a room are controlled, and attribute parameters of the pixels 1-4 are used to control the scene effect of the four lamps. As shown in FIG. 2, at a time t1, in the embodiment, a color parameter of the pixels 1-4 is set to red, and the scene lights provided by the four lamps corresponding to the pixels 1-4 at the time t1 are all red light. Similarly, when the color parameter of the pixels 1-4 at a time t2 is yellow and the color parameter of the pixels 1-4 at a time t3 is blue, the scene lights provided by the four lamps at the time t2 and the time t3 are all respectively yellow light and blue light. In this way, the four lamps in the room sequentially provide the scene colors of red, yellow, and blue at the time t1, t2, and t3, so as to achieve an effect of situation variation by changing the color of the scene light. Moreover, in the embodiment, brightness of the pixels 1-4 may be further set, for example, the color parameters of the pixels 1-4 are respectively red, dark red, crimson, and vermilion at the time t1, the color parameters of the pixels 1-4 are respectively light yellow, yellow, deep yellow, and light yellow at the time t2, the color parameters of the pixels 1-4 are respectively sky blue, light blue, light blue, and blue at the time t3. Therefore, the sound and light control unit 104 may respectively control the corresponding scene light sources to sequentially present a color variation of red, yellow, and blue at the time t1, t2, and t3 according to the attribute parameters of the pixels 1-4, and cause each of the scene light sources to present a corresponding color/brightness extent according to the pixel color parameter. In the above example, the attribute parameters of the pixels 1-4 in the form of 4×3 pixel array data in the AVI format file are used to control the scene light, though the invention is not limited thereto. For example, when the number of the scene light sources is eight, attribute parameters of the pixels 1-8 within the 4×3 pixel array data may be respectively used to control the characteristics of the scene lights emitted by the eight scene light sources, or implement the same by using pixel array data including at least eight pixels. Similarly, when the number of the scene light source is one, the scene effect may be implemented by using pixel array data including at least one pixel.

The pixel array data in the AVI format file is used to describe the light attribute parameter, and the sound attribute parameter is described below. The AVI format file of the embodiment may include a plurality of sound tracks, and each of the sound tracks may have a plurality of attribute parameters, for example, a track number, a frequency distribution, etc. In this way, the sound and light control unit 104 may control the characteristics of the scene sounds emitted by the scene sound sources according to the sound attribute parameters in the AVI format file. Since an operation mode of controlling the characteristics of the scene sounds emitted by the scene sound sources according to the AVI format file is similar to the operation mode of controlling the characteristics of the scene lights emitted by the scene light sources according to the AVI format file by the sound and light control unit 104, details thereof are not repeated. The scene setting data 110, for example, adopts the AVI format, though the invention is not limited thereto.

According to the above description, it is known that the embodiment may be applied to various electronic devices through the scene setting data 110, and the user may easily create, record, edit, store, share, and/or exchange the scene setting data 110 by using a generally electronic device, so as to share the scene setting with others. In this way, different scene playing unit may reproduce the same scene/situation through sharing the same scene setting data 110. Alternatively, customized sound and light effects may be achieved according to different preferences or needs

Referring to FIG. 3, in the embodiment, the scene sound and light generating system 300 further includes a processing unit 302 and a storage unit 304. The processing unit 302 is connected to the sound and light control unit 104 and the storage unit 304. In the embodiment, the storage unit 304 may be used for storing the scene setting data 110, and the storage unit 304 is, for example, a thumb drive, a removable/portable hard disk, a memory card, a digital camera, a video camera, an MP3 player, a mobile phone, etc. that has a storage device such as a removable/portable storage device, a hard disk, etc., or may be a network storage space, a network streaming (for example, audio streaming and/or video streaming) service, or stored data may be provided through data transmission such as email, instant messaging, a community/social website, an Internet calendar service (ICS), etc. The processing unit 302 may be, for example, a central processing unit (CPU), may read the scene setting data 110 from the storage unit 304, and may control the sound and light control unit 104 to drive at least one of the scene light source and the scene sound source to emit at least one of the scene light and the scene sound according to the scene setting data 110. Moreover, each unit within the scene sound and light generating system 300 are, for example, connected through a wireless or wired manner. Since the method for driving the scene light source and the scene sound source by using the sound and light control unit 104 has been described in the aforementioned embodiment, details thereof are not repeated.

In the embodiment, the processing unit 302 may generate sound and light recording data 120 having at least one of sound, frame, and image by driving a creation device/module (for example, a sound recording equipment, Adobe Flash), a recording device/module (for example, a digital camera, a video camera) or an edit device/module (for example, Adobe Flash), etc., may convert the sound and light recording data 120 into the scene setting data 110, and may store the scene setting data 110 to the storage unit 304 to facilitate sharing the scene setting data 110. In the embodiment, the processing unit 302 may also edit the attribute parameters of the scene setting data 110 according to an edit instruction, and edit the sound and light recording data 120 to generate the required scene setting data 110.

However, in some embodiments, the processing unit 302 may directly create the required scene setting data 110 according to the edit instruction. For example, the scene setting data 110 may be written in a script language or created by an object oriented program. In this way, the processing unit 302 may directly generate the scene setting data 110 by writing the script language or executing the object oriented program, and accordingly controls the sound and light control unit 104 to drive at least one of the scene light source and the scene sound source to generate the scene light and/or the scene sound corresponding to the scene setting data 110.

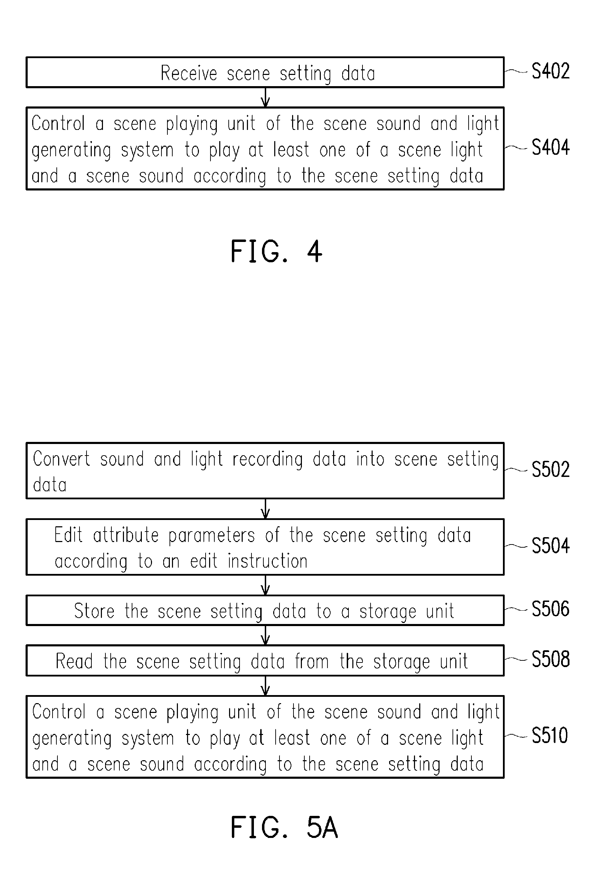

Referring to FIG. 4, the method for generating scene sound and light of the aforementioned scene sound and light generating system may include following steps. First, scene setting data is received (step S402). Then, a scene playing unit of the scene sound and light generating system is controlled to play at least one of a scene light and a scene sound according to the scene setting data (step S404), wherein the scene setting data is used for indicating a characteristic of at least one of the scene light and the scene sound played by the scene playing unit. The scene playing unit may include at least one of a scene light source and a scene sound source, wherein the scene light source is used for generating the scene light, and the scene sound source is used for generating the scene sound. Moreover, the scene setting data is, for example, an AVI format file, and the step S404 may be implemented by controlling the characteristic of at least one of the scene light and the scene sound according to the attribute parameters in the AVI format file when the scene setting data is the AVI format file. In some embodiments, the scene setting data may be written in a script language.

Referring to FIG. 5A, in the embodiment, the method for generating scene sound and light may includes following steps. First, sound and light recording data is converted into scene setting data (step S502), wherein the sound and light recording data is, for example, recorded by a recording device capable of recording at least one of sound and images, such as a pen recorder or a video camera. Then, attribute parameters of the scene setting data are edited according to an edit instruction (step S504). After the attribute parameters of the scene setting data are edited, the scene setting data is stored to a storage unit (step S506), so as to facilitate sharing the scene setting data. When the scene setting data has been stored in the storage unit, the scene setting data may be read from the storage unit (step S508). Then, a step S501 is executed, that is, a scene playing unit of the scene sound and light generating system is controlled to play at least one of a scene light and a scene sound according to the scene setting data.

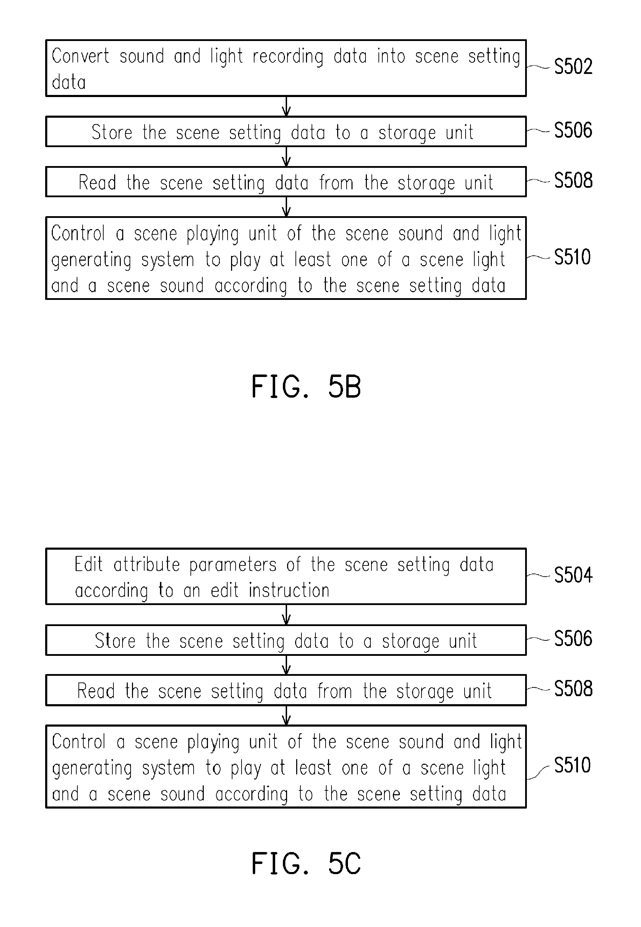

It should be noticed that in some embodiments, before the step S506, it may be done to execute only one step of the step S502 and the step S504, as shown in FIG. 5B and FIG. 5C. That is, only the attribute parameters of the scene setting data are edited, and then the step S506 is directly executed to store the scene setting data to the storage unit, or after the sound and light recording data is converted into the scene setting data, the step S506 is directly executed to store the scene setting data to the storage unit.

In summary, in the embodiment of the invention, the scene setting data is received and the scene playing unit is controlled to play at least one of the scene light and the scene sound according to the scene setting data, so as to implement creating, editing, recording, setting, exchanging, and/or sharing the scene sound and light data and accordingly implement generating customized scene sound and light effect. In the embodiment of the invention, the scene setting data is, for example, an AVI format file or a program code written in the script language.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A scene sound and light generating system, comprising:
a scene playing unit; and
a sound and light control unit, connected to the scene playing unit through a wired or wireless manner, receiving scene setting data, and controlling the scene playing unit to play at least one of a scene light and a scene sound according to the scene setting data, wherein the scene setting data is used for indicating a characteristic of at least one of the scene light and the scene sound played by the scene playing unit.

2. The scene sound and light generating system as claimed in claim 1, wherein the scene playing unit comprises at least one of a scene light source and a scene sound source, the scene light source generates the scene light, and the scene sound source generates the scene sound.

3. The scene sound and light generating system as claimed in claim 1, wherein the scene setting data is an audio video interleave format file, and the sound and light control unit controls the characteristic of at least one of the scene light and the scene sound according to attribute parameters in the audio video interleave format file.

4. The scene sound and light generating system as claimed in claim 1, wherein the sound and light control unit is a control chip.

5. The scene sound and light generating system as claimed in claim 1, wherein the scene setting data is written in a script language.

6. The scene sound and light generating system as claimed in claim 2, further comprising:
a processing unit, controlling the sound and light control unit to drive at least one of the scene light source and the scene sound source according to the scene setting data.

7. The scene sound and light generating system as claimed in claim 6, further comprising:
a storage unit, wherein the processing unit converts sound and light recording data into the scene setting data, and stores the scene setting data to the storage unit.

8. The scene sound and light generating system as claimed in claim 7, wherein the processing unit reads the scene setting data from the storage unit.

9. The scene sound and light generating system as claimed in claim 6, wherein the processing unit edits attribute parameters of the scene setting data according to an edit instruction.

10. The scene sound and light generating system as claimed in claim 6, wherein the processing unit is a central processing unit.

11. A method for generating scene sound and light, adapted to a scene sound and light generating system, and the method for generating scene sound and light comprising:
receiving scene setting data; and
controlling a scene playing unit of the scene sound and light generating system to play at least one of a scene light and a scene sound according to the scene setting data, wherein the scene setting data is used for indicating a characteristic of at least one of the scene light and the scene sound played by the scene playing unit.

12. The method for generating scene sound and light as claimed in claim 11, wherein the scene setting data is an audio video interleave format file, and the step of controlling the scene playing unit of the scene sound and light generating system to play at least one of the scene light and the scene sound according to the scene setting data comprises:
controlling the characteristic of at least one of the scene light and the scene sound according to attribute parameters in the audio video interleave format file.

13. The method for generating scene sound and light as claimed in claim 11, further comprising:
converting sound and light recording data into the scene setting data; and
storing the scene setting data to a storage unit.

14. The method for generating scene sound and light as claimed in claim 13, wherein the step of receiving the scene setting data comprises:
reading the scene setting data from the storage unit.

15. The method for generating scene sound and light as claimed in claim 11, further comprising:
editing attribute parameters of the scene setting data according to an edit instruction.

16. A scene playing unit, configured to play at least one of a scene light and a scene sound according to scene setting data, wherein the scene setting data is used for indicating a characteristic of at least one of the scene light and the scene sound played by the scene playing unit, and the scene playing unit is controlled by the scene setting data to play.
